# EUROPÄISCHE PATENTSCHRIFT

(11) **EP 0 501 236 B1**
(45) Veröffentlichungstag und Bekanntmachung des Hinweises auf die Patenterteilung: **08.06.1994**
(21) Anmeldenummer: 92102376.8
(22) Anmeldetag: 13.02.1992
(51) Int. Cl.: F04C 15/00

(54) **Pumpe, insbesondere gekapselte medizinische Pumpe**
Pump, in particular encased medical pump
Pompe, en particulier pompe médicale encaissée

(30) Priorität: 27.02.1991 DE 4106060
(43) Veröffentlichungstag der Anmeldung: 02.09.1992
(73) Patentinhaber: Fresenius AG, 61350 Bad Homburg (DE)
(72) Erfinder: Metzner, Dieter, W-8720 Schweinfurt (DE); Rölle, Jürgen, W-8721 Niederwerrn (DE); Prinz, Martin, W-8783 Hammelburg (DE); Walter, Raimond, W-8721 Schwebheim (DE)
(74) Vertreter: Fuchs Mehler Weiss

(56) Entgegenhaltungen:
- DE-A- 3 922 436
- FR-A- 2 111 402
- JP-A- 1 170 778
- JP-A- 2 277 983
- US-A- 2 711 286

## Beschreibung

Die Erfindung betrifft eine Pumpe, insbesondere eine gekapselte medizinische Pumpe, nach dem Oberbegriff des Anspruches 1.

Eine derartige Pumpe ist aus der CH-A- 621 655 bekannt, bei der es sich um eine Aquarienumwälzpumpe handelt. Der Pumpabschnitt dieser Pumpe ist über eine Welle mit der Antriebseinrichtung verbunden. Hierbei ist das Gehäuse des Pumpenabschittes an dasjenige der Antriebseinrichtung angeflanscht, woraus sich bei der bekannten Pumpe ein sehr großer Platzbedarf ergibt. Aus diesem Grund ist die bekannte Pumpe in all denjenigen Bereichen nicht anwendbar, in denen es auf möglichst geringe und kompakte Außenabmessungen ankommt. Hierzu gehören vor allem Gebiete in der Medizintechnik, wie insbesondere Anwendungen für Dialysegeräte.

Aus der JP-A-2-277983 ist eine gekapselte Innenzahnradpumpe bekannt, bei der ein mit einem Rotor versehenes Innenzahnrad konzentrisch innerhalb eines Stators angeordnet ist. Innerhalb dieses Innenzahnrades ist ein auf einer feststehenden Welle gelagertes Außenzahnrad angeordnet. Zur axialen Lagerung der beiden Zahnräder ist jeweils zwischen den Stirnseiten der Zahnräder und dem Gehäuse ein scheibenförmiges Axiallager angeordnet. Zwischen einem Axiallager und dem Gehäuse befindet sich ein mit dem Druckraum der Pumpe verbundener Hohlraum. Die beiden Axiallager sind fest im Gehäuse angeordnet, so daß ein großer abrasiver Verschleiß zwischen den Stirnflächen der Zahnräder und den entsprechenden, gegenüberliegenden Fläche der Axiallager auftritt. Aufgrund der größeren Umfängsgeschwindigkeit des äußeren Zahnrades gegenüber dem inneren Zahnrad ist dieser abrasiver Verschleiß zwischen der Stirnfläche des äußeren Zahnrades und der entsprechenden, gegenüberliegenden Fläche der Axiallager größer. Somit ergeben sich mit zunehmender Betriebsdauer auch zunehmende Spaltverluste, da das mit Druck beaufschlagte Axiallager immer an dem Zahnrad mit dem geringeren abrasiven Verschleiß anliegt.

Es ist daher Aufgabe der vorliegenden Erfindung, eine Pumpe, insbesondere eine gekapselte medizinische Pumpe, der im Oberbegriff des Anspruches 1 angegebenen Art zu schaffen, die kompakt ist, hohe Pumpleistungen erbringt, eine kostengünstige Konstruktion darstellt und neben der Vermeidung von abrasivem Verschleiß einen Ausgleich von abrasiven Verschleißerscheinungen ermöglicht.

Die Lösung dieser Aufgabe erfolgt durch die Merkmale des Anspruches 1.

Die erfindungsgemäße Pumpe stellt eine Konstruktion dar, bei der der Pumabschnitt in die Antriebseinrichtung integriert ist, was zu einer sehr kompakten Konstruktion führt.

Der Stator der erfindungsgemäßen Pumpe kann hierbei im wesentlichen dem Aufbau des Stators eines mehrphasigen Asynchronmotors gleichen und dient zur Erzeugung eines magnetischen Drehfeldes. Der Stator weist vorteilhafterweise genutete Statorbleche auf, in deren Nuten gleichmäßig am Umfang verteilt die Ständerwicklung angeordnet ist. Die Wicklung kann hierbei drei- oder vierphasig sein. Der in den Phasen fließende Wechselstrom erzeugt nach dem Prinzip des Asynchronmotors ein umlaufendes magnetisches Drehfeld. Dieses Feld besteht aus umlaufenden magnetischen Polen. Die Anzahl der Pole stimmt mit der Polzahl des Rotors überein. Der Rotor läuft synchron mit dem Drehfeld, was dadurch erreicht werden kann, daß über die Rückkopplung der Rotorstellung bei einer besonders bevorzugten Ausführungsform mittels einer Sensoranordnung die Drehfeldgeschwindigkeit geregelt wird. Alternativ kann statt einem Permanentmagnetrotor ein Hystereseläufer benutzt werden, wobei die Sensoreinrichtung dann entfallen kann. Die Wickelköpfe an den beiden Enden des Stators können durch zwei ringförmige Aufsatzteile abgedeckt werden. Diese Aufsatzteile werden über Einpassungen zum eigentlichen Stator positioniert, denn sie bestimmen später die genaue Positionierung sowohl der Rotor-/Pumpeneinheit als auch der Sensoranordnung.

Der permanentmagnetische Rotor kann im einfachsten Fall aus isotrop magnetisierbarem Material bestehen, also beispielsweise ein Ringmagnet mit acht Magnetpolen am Umfang sein. Alternativ können diese Pole durch Segmentmagnete aus anisotropem Material hergestellt werden. Wegen der besonderen Medienbeständigkeit werden vorteilhafterweise Ferrit-Magnete benutzt.

Zu den besonderen Vorteilen der erfindungsgemäßen Pumpe zählen auf der Antriebsseite, daß durch die mögliche elektronische Kommutierung der Bürstenverschleiß eines herkömmlichen Gleichstrommotors entfällt.

Durch den Direktantrieb des Pumpensegmentes über den Stator entfallen verschleißbehaftete bewegliche Teile eines herkömmlichen Gleichstrommotors und der Antriebsmagnet für eine Magnetkupplung.

Da die Antriebseinrichtung das Verhalten eines permanent erregten Gleichstrommotors aufweist, läuft er in jeder Lage mit hohem Anlaufmoment richtungsdefiniert an und reißt auch bei Lastspitzen nie ab. Der Motorstrom steigt linear mit dem Belastungsmoment an, wodurch im gesamten Betriebsbereich ein hoher Wirkungsgrad im Gegensatz zu Synchron- oder Asynchronmotoren zu erwarten ist.

Durch Verändern der Betriebsspannung oder durch eine Pulsbreitenmodulation der Leistungsendstufe kann die Drehzahl und damit die Förderleistung der Pumpe auf einfache Weise geregelt werden.

Weiterhin weist die erfindungsgemäße Pumpe bezüglich ihres Aubaues folgende Vorteile auf:

Aus der konzentrischen Anordnung von Antriebseinrichtung, Rotor und Pumpenabschnitt ergibt sich ein wesentlich geringerer Platzbedarf für die komplette Einheit.

Die Kombination eines Direktantriebes mit einer vorteilhafterweise volumetrischen Pumpe ist besonders einfach aufgebaut, da sie lediglich zwei bewegte Teile umfaßt.

Ferner ergeben sich besondere Vorteile im Hinblick auf einen fertigungs- und servicefreundlichen Aufbau durch eine modulare Konstruktion der Antriebs- und Steuereinheit, die aus Stator und Sensoreinheit bestehen kann, sowie der durch den Pumpenabschnitt gebildeten Pumpeneinheit.

Schließlich ist bei der erfindungsgemäßen Pumpe eine einfache Austauschbarkeit der Pumpenteile des Pumpenabschnittes gewährleistet.

Die Unteransprüche haben vorteilhafte Weiterbildungen der Erfindung zum Inhalt.

Ist der Pumpenabschnitt als Innenzahnradpumpe aufgebaut, die vorteilhafterweise ein Außen- und ein Innenrad aufweist, kann das Außenrad fest mit dem Rotor verbunden werden, und wird von diesem somit angetrieben. Das Innenrad kann auf einer festehenden Achse gelagert werden, die ihrerseits vorteilhafterweise an einem Lagerteil angebracht sein kann, das gleichzeitig der Lagerung des Rotors über eine vorteilhafterweise vorgesehene Gleitbuchse dienen kann.

Hierbei ist es bei einer besonders bevorzugten Ausführungsform möglich, den Rotor, die Gleitbuchse und das Außenrad der Innenzahnradpumpe zu einer Einheit zusammenzufassen. Vorteilhafterweise sind Gleitbuchse und Außenrad aus Kunststoff und in den Rotor eingespritzt. Sowohl die Gleitbuchse als auch das Außenrad können sich dabei im Innenraum bzw. im Innendurchmesser der Rotors befinden.

Bei einer weiteren bevorzugten Ausführungsform ist zur Bildung einer stirnseitigen Dichtfläche auf das Außenrad eine kreisförmige Dichtplatte, vorzugsweise in Form einer Stahlplatte, aufgesetzt.

Die feststehende Achse ist exzentrisch zum Lagerteil angeordnet, so daß die Funktion der Innenzahnradpumpe gewährleistet ist. Die entsprechenden Druck- und Saugbereiche des Pumpabschnittes befinden sich stirnseitig im Lagerteil. Vom Druck- und Saugbereich kann je eine Bohrung durch das Lagerteil zur Außenseite der Pumpe führen und dort in vorteilhafterweise vorgesehenen Anschlußtüllen enden.

Innerhalb des Rotor- bzw. Pumpraumes kann eine Stichbohrung in den Druckkanal vorgesehen sein, wodurch sich innerhalb des Rotor- bzw. Pumpraumes ebenfalls der von dem Pumpenabschnitt erzeugte Druck einstellt. Dadurch entsteht eine Kraftkomponente auf die Platte, die die Pumpe selbstabdichtend macht. Alternativ kann diese Kraftkomponente durch folgende zusätzliche Maßnahme variabel gestaltet werden:

Saug- und Druckseite des Pumpabschnittes können eine Verbindungsbohrung erhalten, die durch eine Drosselschraube mehr oder weniger stark geschlossen werden kann. Dadurch ist eine stufenlose Leistungseinstellung der Pumpe - bei vorgegebener Drehzahl - möglich.

Zu den besonderen Vorteilen der erfindungsgemäßen Pumpe bezüglich des Verwendens eines Innenzahnradpumpabschnittes gehört zunächst ein geräuschärmerer Lauf im Betrieb als bei vergleichbaren außenverzahnten Zahnradpumpen.

Ferner wird durch den bei Innenzahnradpumpen größeren Zahneingriff ein kleinerer Ungleichförmigkeitsgrad in Bezug auf das geförderte Volumen erreicht.

Die Selbstabdichtung der erfindungsgemäßen Pumpe ergibt folgende Vorteile:

Zunächst spielen axiale Spaltmaße keine Rolle.

Ferner ergibt sich keine Leistungsdrift über die Lebensdauer, da die Pumpe selbst nachstellend ist.

Die Dichtplatte ist starr mit dem Außenrad verbunden, wodurch sich der besondere Vorteil der Vermeidung von Reibverschleiß an der entsprechenden Stirnseite des Außenrades ergibt.

Die Dichtplatte hat gegenüber dem Innenrad nur einen geringen Gleitschlupf. Somit hat auch das Innenrad an der entsprechenden Stirnseite einen sehr geringen Reibverschleiß, verglichen mit bekannten Lösungen.

Ferner ist bei einer weiteren besonders bevorzugten Ausführungsform der erfindungsgemäßen Pumpe ein Trenn- bzw. Spaltrohr vorgesehen, das zur Medientrennung zwischen Stator und medienführendem Pumpraum dient.

Vorteilhafterweise wird als Trenn- bzw. Spaltrohr ein extrem dünnwandiges Edelstahlrohr benutzt, mit dem die Innenfläche des Stators ausgekleidet wird. Dieses Spaltrohr überdeckt gleichzeitig die Aufsätze, die die Wickelköpfe an den beiden Enden des Stators abdecken. Zur Eliminierung von Toleranzen kann das Spaltrohr nach Einbau noch aufgeweitet werden, so daß das Rohr dicht am Stator und an den Aufsatzteilen anliegt.

Die Benutzung eines dünnwandigen Spaltrohres, das nach dem Einsetzen in den Stator noch aufgeweitet wird, ergibt durch das Anliegen an der Innenwandung des Stators weitere folgende Vorteile:

Die Wandstärke kann kleiner als 0,1 Millimeter gewählt werden, da das Spalt- bzw. Trennrohr nicht mehr eigenstabil zu sein braucht.

Fertigungstoleranzen des Statorinnendurchmessers bzw. des Spaltrohraußendurchmessers können ausgeglichen werden.

Durch die beiden zuvor genannten Maßnahmen wird der Luftspalt zwischen Stator und Rotor minimiert, so daß der maximal mögliche Wirkungsgrad des elektromagnetischen Systems erreichbar ist.

Schließlich kann bei einer weiteren besonders bevorzugten Ausführungsform eine Sensoranordnung, vorzugsweise in Form einer Mehrzahl von Hall-Sensoren vorgesehen sein, die die aktuelle Stellung des Rotors ermittelt.

Die Sensoranordnung kann sich in einem der Pumpe gegenüberliegenden Gehäuse befinden. Durch die Rückkopplung auf die Phasenströme des Stators ergibt sich das Funktionsprinzip eines elektronisch kommutierten Gleichstrommotors. Für einen dreiphasigen Stator benötigt man vorzugsweise drei Hall-Sensoren und für einen vierphasigen Stator deren zwei.

Weitere Einzelheiten, Merkmale und Vorteile der Erfindung ergeben sich aus nachfolgender Beschreibung eines Ausführungsbeispieles anhand der Zeichnung.

Es zeigt:
Fig. 1 einen Längsschnitt durch eine Ausführungsform einer erfindungsgemäßen Pumpe, und
Fig. 2 einen Querschnitt durch die Pumpe gemäß Fig. 1.

Die in den Figuren dargestellte Ausführungsform einer erfindungsgemäßen Pumpe 1 kann insbesondere eine gekapselte medizinische Pumpe darstellen.

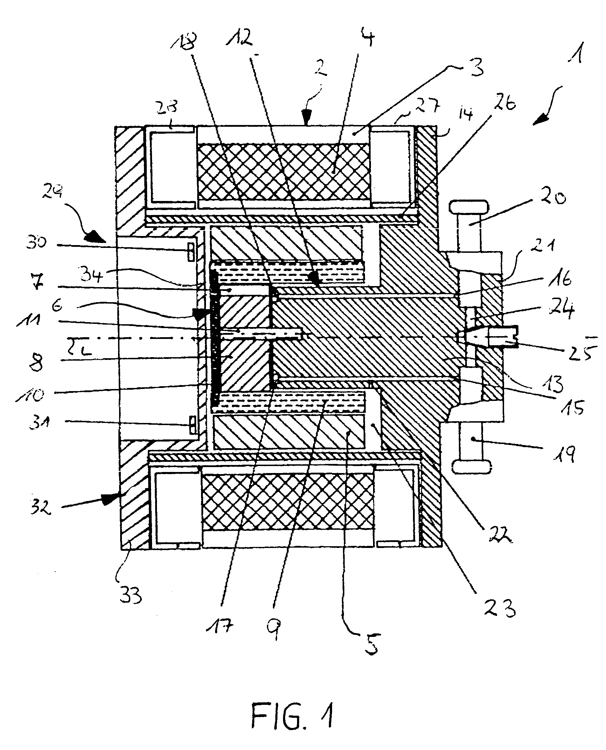

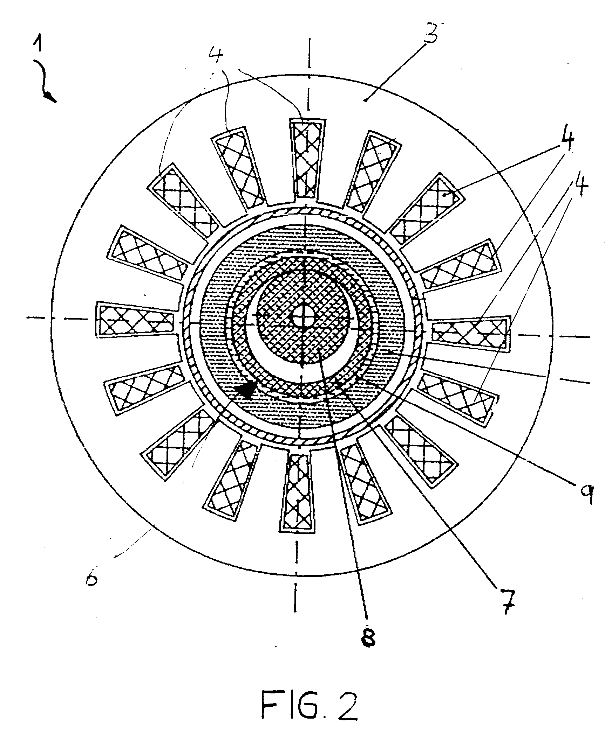

Die Pumpe 1 weist eine Antriebseinrichtung 2 mit einem Stator 3 auf, der eine insbesondere aus Fig. 2 ersichtliche Mehrzahl von Ständerwicklungen 4 umfaßt. Ferner weist die Antriebseinrichtung 2 einen konzentrisch zum Stator 3 angeordneten permantentmagnetischen Rotor 5 auf, der im Inneren des hohl ausgebildeten Stators 3 angeordnet ist, wie dies aus der Darstellung der Fig. 1 und 2 hervorgeht.

Die Pumpe 1 weist ferner einen Pumpabschnitt 6 auf, der zur Drehmomentübertragung mit dem Rotor 5 verbunden ist. Wie die Fig. 1 und 2 erkennen lassen, ist der Pumpabschnitt 6 innerhalb des hohl ausgebildeten Rotors 5 angeordnet, woraus sich eine sehr platzsparende und kompakte Konstruktion der erfindungsgemäßen Pumpe 1 ergibt.

Der Pumpabschnitt 6 ist vorteilhafterweise als Innenzahnradpumpe ausgebildet und weist ein Außenrad 7 und ein mit diesem in Eingriff stehendes Innenrad 8 auf.

Bei der dargestellten Ausführungsform ist das Außenrad 7 mit dem Rotor 5 verbunden, wozu zwischen dem Außenrad 7 und dem Rotor 5 eine Gleitbuchse 9 vorgesehen ist. Bei einer besonders bevorzugten Ausführungsform können der Rotor 5, die Gleitbuchse 9 und das Außenrad 7 eine Einheit bilden. Wie die Darstellung der Fig. 1 und 2 verdeutlicht, befinden sich sowohl die Gleitbuchse 9 als auch das Außenrad 7 im Innendurchmesser des Rotors 5.

Ferner verdeutlicht Fig. 1, daß zur Abdichtung bzw. zur Bildung einer stirnseitigen Dichtfläche auf das Außenrad 7 eine vorzugsweise kreisförmige Dichtplatte 10, insbesondere in Form einer Stahlplatte, aufgesetzt ist.

Weiterhin ergibt sich aus den Fig. 1 und 2, daß das Innenrad 8 auf einer feststehenden Achse 11, beispielsweise in Form eines Achszapfens, gelagert ist. Der Achszapfen 11 wiederum ist an einem Lagerteil 12 befestigt, das einen vorzugsweise zylindrischen Mittelteil 13 aufweist. Die Darstellung der Fig. 1 und 2 verdeutlicht hierbei, daß die Achse 11 exzentrisch zur Achse L des Mittelteiles 13 angeordnet ist. Diese exzentrische Anordnung ermöglicht die Funktion der Innenzahnradpumpe.

Das Lagerteil 12 weist ferner einen stirnseitigen umlaufenden Flansch 14 auf, der sich radial nach außen erstreckt und dessen Außendurchmesser demjenigen des Stators 3 entspricht. Der Flansch 14 ist einstückig mit dem Mittelteil 13 ausgebildet, das zu beiden Seiten der Achse L mit je einer Durchgangsbohrung 15 bzw. 16 versehen ist, die vom Druck- und Saugbereich 17 bzw. 18 aus zur Außenseite der Pumpe 1 führen und dort in Anschlußtüllen 19 bzw. 20 enden. Die Anschlußtüllen 19 und 20 sind an einem sich vom Flansch aus nach außen erstreckenden Ansatzstück 21 angebracht, das im Beispielsfalle mit dem Mittelteil 13 und dem Flansch 14 einstückig ausgebildet ist, wie dies sich aus Fig. 1 ergibt.

Der Saug- und Druckbereich ist auf der Stirnseite des Mittelteiles 13 angeordnet, der dem Außen- bzw. Innenrad benachbart angeordnet ist.

Fig. 1 verdeutlicht ferner, daß im Mittelteil 13 ferner eine Stichbohrung 22 angeordnet ist, die vom Rotor- bzw. Pumpenraum 23 aus in die Bohrung bzw. den Druckkanal 15 führt. Hierdurch stellt sich innerhalb des Rotor- bzw. Pumpenraumes 23 ebenfalls der von der Pumpe erzeugte Druck ein. Dadurch entsteht eine Kraftkomponente auf die Dichtplatte 10, die die erfindungsgemäße Pumpe 1 selbstabdichtend macht.

Alternativ kann diese Kraftkomponente durch das Vorsehen einer Verbindungsbohrung 24 im Ansatzteil 21 erreicht werden, die durch eine Drosselschraube 25 mehr oder weniger stark geschlossen werden kann. Wie Fig. 1 verdeutlicht, ist die Verbindungsbohrung 24 mit dem Druck- und Saugkanal 15 und 16 verbunden, wodurch eine stufenlose Leistungseinstellung der erfindungsgemäßen Pumpe 1, bei vorgegebener Drehzahl, möglich gemacht wird.

Die Fig. 1 und 2 verdeutlichen ferner die Anordnung eines Trenn- bzw. Spaltrohres 26, das zwischen dem Stator 3 und dem Rotor 5 innerhalb der erfindungsgemäßen Pumpe 1 angeordnet ist. Das Spaltrohr 26 kann nach der Montage aufgeweitet werden, so daß es sich dichtend an den Stator 3 und Aufsatzteile 27 bzw. 28 anlegt, die mit dem Stator 3 zum Abdecken der Wicklungen 4 verbunden sind. Die Fig. 1 verdeutlicht, daß das Spaltrohr 26 die Aufsatzteile 27 und 28 überdeckt.

Fig. 1 verdeutlicht weiterhin, daß die erfindungsgemäße Pumpe 1 eine Sensoranordnung 29 umfaßt, die eine Mehrzahl von vorzugsweise als Hall-Sensoren ausgebildeten Sensoren umfassen kann, von denen im Beispielsfalle die Sensoren 30 und 31 in Fig. 1 gezeigt sind. Die Sensoren 30 und 31 sind bei der in Fig. 1 dargestellten Ausführungsform in einem dem Pumpenabschnitt 6 gegenüberliegenden U-bügelförmigen Gehäuse 32 angeordnet, und zwar in dem von einer stirnseitigen Umfangswand 33 nach innen ragenden wandartig ausgebildeten Mittelteil 34. Die Sensoranordnung 29 dient zur Erkennung der Rotorstellung, wobei durch die Rückkopplung auf die Phasenströme des Stators 3 das Funktionsprinzip eines elektronisch kommutierten Gleichstrommotors verwirklicht wird.

Für einen dreiphasigen Stator 3 benötigt man drei Hall-Sensoren für die Sensoranordnung 29, während für einen vierphasigen Stator 3 zwei Hall-Sensoren erforderlich sind.

## Patentansprüche

1. Pumpe (1), insbesondere gekapselte medizinische Pumpe,
- mit einer Antriebseinrichtung (2), die einen Stator (3) mit einer Mehrzahl von Ständerwicklungen (4) und einen konzentrisch zum Stator (3) und innerhalb diesen angeordneten permanentmagnetischen Rotor (5) aufweist;
- mit einem innerhalb des hohl ausgebildeten Rotors (5) angeordneten, als Innenzahnradpumpe ausgebildeten Pumpenabschnitt (6), der ein Innen- und ein Außenrad (8 bzw. 7) aufweist, das zur Drehmomentübertragung mit dem Rotor (5) verbunden ist; und
- mit einem Lagerteil (12), das eine feststehende Achse (11) aufweist, die das Innenrad (8) lagert, wobei das Lagerteil (12) Durchgangsbohrungen (15, 16) aufweist, die vom Druck- und Saugbereich (17, 18) zu den Pumpenanschlüssen (19, 20) führen, und eine Stichbohrung (22) aufweist, die vom Rotor- bzw. Pumpenraum (23) aus zum Druckbereich (17) führt, dadurch gekennzeichnet,
- daß das Außenrad (7) an seiner dem Lagerteil (12) abgewandten Seite starr mit einer stirnseitigen Dichtplatte (10) verbunden ist, und
- daß der Rotor (5) über eine Gleitbuchse (9) auf dem Lagerteil (12) gelagert ist.

2. Pumpe nach Anspruch 1, dadurch gekennzeichnet, daß der Rotor (5), die Gleitbuchse (9) und das Außenrad (7) einstückig ausgebildet sind.

3. Pumpe nach Anspruch 2, dadurch gekennzeichnet, daß die Gleitbuchse (9) und das Außenrad (7) aus Kunststoff bestehen und in den Rotor (5) eingespritzt sind.

4. Pumpe nach einem der Ansprüche 1 bis 3, dadurch gekennzeichnet, daß zwischen dem Stator (3) und der Außenseite des Rotors (5) ein Trennrohr (26) angeordnet ist.

5. Pumpe nach Anspruch 4, dadurch gekennzeichnet, daß das Trennrohr (26) als dünnwandiges Edelstahlrohr ausgebildet ist.

6. Pumpe nach Anspruch 4 oder 5, dadurch gekennzeichnet, daß das Trennrohr (26) dicht am Stator (3) anliegt.

7. Pumpe nach einem der Ansprüche 1 bis 6, gekennzeichnet durch eine Sensoranordnung (29) zur Ermittlung der Stellung des Rotors (5).

8. Pumpe nach Anspruch 7, dadurch gekennzeichnet, daß die Sensoranordnung (29) in einem dem Pumpabschnitt (6) benachbart angeordneten Gehäuseteil (32) angeordnet ist.

9. Pumpe nach Anspruch 7 oder 8, dadurch gekennzeichnet, daß die Sensoranordnung eine Mehrzahl von Hall-Sensoren (30, 31) aufweist.

## Revendications

1. Pompe (1), notamment pompe médicale encapsulée, comportant
- un dispositif d'entraînement (2), qui comporte une multiplicité d'enroulements statoriques (4) et un rotor à aimants permanents (5), qui est disposé concentriquement par rapport au stator (3) et à l'intérieur de ce dernier;
- une section de pompage (6), qui est disposée à l'intérieur du rotor creux (5), est réalisée sous la forme d'une pompe à engrenages intérieurs et possède une roue intérieure (8) et une roue extérieure (7), qui est raccordée au rotor (5) pour la transmission du couple; et
- un élément de palier (12), qui possède un axe fixe (11) qui supporte la roue intérieure (8), l'élément de palier (12) possédant des perçages traversants (15, 16), qui relient la zone de refoulement et la zone d'aspiration (17, 18) aux raccords (19, 20) de la pompe, et possédant un perçage (22), qui relie la chambre (23) du rotor ou de la pompe à la zone de refoulement (17),
caractérisée en ce
- que la roue extérieure (7) est reliée rigidement, au niveau de son côté tourné à l'opposé de l'élément de palier (12), à une plaque frontale d'étanchéité (10), et
- que le rotor (5) est supporté par l'élément de palier (12), par l'intermédiaire d'une douille coulissante (9).

2. Pompe selon la revendication 1, caractérisée en ce que le rotor (5), la douille coulissante (9) et la roue extérieure (7) sont réalisés d'un seul tenant.

3. Pompe selon la revendication 2, caractérisée en ce que la douille coulissante (9) et la roue extérieure (7) sont réalisées en une matière plastique et sont moulées par injection dans le rotor (5).

4. Pompe selon l'une des revendications 1 à 3, caractérisée en ce qu'un tube de séparation (26) est disposé entre le stator (3) et la face extérieure du rotor (5).

5. Pompe selon la revendication 4, caractérisée en ce que le tube de séparation (26) est réalisée sous la forme d'un tube en acier spécial à paroi mince.

6. Pompe selon la revendication 4 ou 5, caractérisée en ce que le tube de séparation (10) s'applique étroitement contre le stator (3).

7. Pompe selon l'une des revendications 1 à 6, caractérisée par un dispositif à capteurs (29) servant à déterminer la position du rotor (5).

8. Pompe selon la revendication 7, caractérisée en ce que le dispositif à capteurs (29) est disposé dans un élément de boîtier (32), qui est disposé au voisinage de la section de pompage (6).

9. Pompe selon la revendication 7 ou 8, caractérisée en ce que le dispositif à capteurs possède une multiplicité de capteurs de Hall (30, 31).

## Claims

1. A pump (1), in particular an enclosed medical pump, comprising
- drive means (2) including a stator (3) with a plurality of stator windings (4), and a permanent-magnet rotor (5) concentrically arranged relative to said stator (3) within said stator; and
- a pump section (6) arranged inside said hollow-shaped rotor (5) and embodied as internal gear pump, said pump section having an internal and an external gear (8 resp. 7) which is connected to said rotor (5) for torque transmission; and
- a support member (12) having a fixed shaft (11) which supports said internal gear (8) with said support member (12) comprising through holes (15, 16) leading from the pressure and suction portion (17, 18) to said pump connections (19, 20) and comprising a tap hole (22) leading from said rotor resp. pump chamber (23) to said pressure portion (17) characterized in
- that said external gear (7) is at the side opposite to said support member (12) rigidly connected to a front sealing plate (10), and
- that said rotor (5) is mounted on said support member (12) via a slide bush (9).

2. A pump according to claim 1, characterized in that said rotor (5), said slide bush (9) and said external gear (7) are made integral.

3. A pump according to claim 2, characterized in that said slide bush (9) and said external gear (7) are made of a plastic material and injection molded into said rotor (5).

4. A pump according to any one of claims 1 to 3, characterized in that a separation tube (26) is arranged between said stator (3) and the external side of said rotor (5).

5. A pump according to claim 4, characterized in that said separation tube (26) is designed as a thin-walled tube of high-quality steel.

6. A pump according to claim 4 or 5, characterized in that said separation tube (26) sealingly rests on said stator (3).

7. A pump according to any one of claims 1 to 6, characterized by a sensor assembly (29) for sensing the position of said rotor (5).

8. A pump according to claim 7, characterized in that said sensor assembly (29) is arranged in a housing part (32) disposed adjacent to said pump section (6).

9. A pump according to claim 7 or 8, characterized in that said sensor assembly comprises a plurality of Hall sensors (30, 31).
